# EUROPEAN PATENT SPECIFICATION

(11) **EP 4 184 312 B1**
(45) Date of publication and mention of the grant of the patent: **11.11.2026**
(21) Application number: 22206023.8
(22) Date of filing: 08.11.2022
(51) Int. Cl.: G06F 7/58

(54) **RANDOM NUMBER GENERATORS, INTEGRATED CIRCUITS HAVING RANDOM NUMBER GENERATORS, AND METHODS OF OPERATING RANDOM NUMBER GENERATORS**
ZUFALLSZAHLENGENERATOREN, INTEGRIERTE SCHALTUNGEN MIT ZUFALLSZAHLENGENERATOREN UND VERFAHREN ZUM BETRIEB VON ZUFALLSZAHLENGENERATOREN
GÉNÉRATEURS DE NOMBRES ALÉATOIRES, CIRCUITS INTÉGRÉS AYANT DES GÉNÉRATEURS DE NOMBRES ALÉATOIRES, ET PROCÉDÉS DE FONCTIONNEMENT DE GÉNÉRATEURS DE NOMBRES ALÉATOIRES

(30) Priority: 18.11.2021 KR 20210159356; 20.04.2022 KR 20220049015
(43) Date of publication of application: 24.05.2023
(73) Proprietor: Samsung Electronics Co., Ltd., Gyeonggi-do 16677 (KR)
(72) Inventor: PARK, Jieun, 16677 Suwon-si (KR); LEE, Yongki, 16677 Suwon-si (KR); NOH, Sumin, 16677 Suwon-si (KR); CHOI, Yunhyeok, 16677 Suwon-si (KR); KARPINSKYY, Bohdan, 16677 Suwon-si (KR)
(74) Representative: Marks & Clerk LLP

(56) References cited:
- ELISSATI O ET AL: "Self-Timed Rings: A Promising Solution for Generating High-Speed High Resolution Low-Phase Noise Clocks", 1 September 2010 (2010-09-01), pages 22 - 42, XP093034717, Retrieved from the Internet <URL:https://core.ac.uk/download/pdf/31570384.pdf> DOI: 10.1007/978-3-642-
- ZHANG YIFAN ET AL: "A Self-Timed Ring Based True Random Number Generator on FPGA", 2018 14TH IEEE INTERNATIONAL CONFERENCE ON SOLID-STATE AND INTEGRATED CIRCUIT TECHNOLOGY (ICSICT), IEEE, 31 October 2018 (2018-10-31), pages 1 - 3, XP033464809, ISBN: 978-1-5386-4440-9, [retrieved on 20181205], DOI: 10.1109/ICSICT.2018.8565658
- ABDELKARIM CHERKAOUI ET AL: "A Self-Timed Ring Based True Random Number Generator", ASYNCHRONOUS CIRCUITS AND SYSTEMS (ASYNC), 2013 IEEE 19TH INTERNATIONAL SYMPOSIUM ON, IEEE, 19 May 2013 (2013-05-19), pages 99 - 106, XP032431277, ISBN: 978-1-4673-5956-6, DOI: 10.1109/ASYNC.2013.15
- GIMENEZ GREGOIRE ET AL: "Self-timed Ring based True Random Number Generator: Threat model and countermeasures", 2017 IEEE 2ND INTERNATIONAL VERIFICATION AND SECURITY WORKSHOP (IVSW), IEEE, 3 July 2017 (2017-07-03), pages 31 - 38, XP033151841, DOI: 10.1109/IVSW.2017.8031541
- MARTIN HONORIO ET AL: "A New TRNG Based on Coherent Sampling With Self-Timed Rings", IEEE TRANSACTIONS ON INDUSTRIAL INFORMATICS, IEEE SERVICE CENTER, NEW YORK, NY, US, vol. 12, no. 1, 1 February 2016 (2016-02-01), pages 91 - 100, XP011597925, ISSN: 1551-3203, [retrieved on 20160203], DOI: 10.1109/TII.2015.2502183

## Description

### TECHNICAL FIELD

Aspects of the present disclosure relate to random number generators, integrated circuits including random number generators, and methods of operating random number generators.

### BACKGROUND

In general, a random number may be used to generate a secret key within a security system. Accordingly, the security system may be provided with a random number generator. For security reasons, it is desirable that the random number generator generates random numbers with unpredictable values. For example, security systems may require or desire generation of a true random number that is unpredictable and has no periodicity. A true random number is one generated from a physical noise source, is unpredictable, and has no periodicity. A true random number generator (TRNG) according to a related art may generate a random number using thermal noise, shot noise, or a clock signal having an irregular ring oscillator cycle.

XP093034717, "Self-Timed Rings: A promising Solution for Generating High-Speed High Resolution Low-Phase Noise Clocks" (Elissato O Et al), discloses a high-speed multi-phase oscillator based on self-timed rings.

XP033464809, "A self-Timed Ring Based True Random Number Generator (TRNG) on FPGA" (Zhang Yifan Et al), discloses a true random number generator based on a combination of self-timed ring and ultra-fast carry-logic primitives to design a new TRNG on FPGA.

### SUMMARY

Aspects of the present disclosure provide random number generators that generate random numbers at high speed, and also provide integrated circuits including such random number generators, and methods of operating the random number generators.

Some example embodiments of the inventive concepts provide random number generators that reliably generate random numbers at high speed, and also provide integrated circuits including the random number generators, and methods of operating the random number generators.

According to some aspects, a random number generator may include an initial random number generator configured to generate an initial random number, a self-timed ring (STR) oscillator configured to receive the initial random number from the initial random number generator, the STR oscillator having a plurality of ring stages each configured to generate either a bubble when an output value of the stage is the same as that of a previous stage, or a token when the output value of the stage is different from that of the previous stage, a duty corrector configured to adjust a duty of an output value of each of the ring stages, and a sampling circuit configured to sample a random number using a logic operation from the duty-corrected output values.

According to some aspects, a method of operating a random number generator may include generating initial values at least some of the plurality of ring stages using an initial random number generator, operating the STR oscillator using the initial values, correcting duties of output values outputted by the STR oscillator, and generating a random number by sampling the corrected output values.

According to some aspects, a method of operating a random number generator may include generating, by a first STR oscillator-based random number generator, a first random number, and generating, by a second STR oscillator-based random number generator, a second random number using the first random number.

According to some aspects, an integrated circuit may include a pseudo random number generator configured to generate a pseudo random number, and an STR oscillator-based random number generator having a plurality of ring stages that each generate either a bubble when an output value of the stage is the same as that of a previous stage, or a token when the output value of the stage is different from that of the previous stage. In an initialization mode, initial values of at least some of the plurality of ring stages may be determined by the pseudo random number.

According to some aspects, an authentication device may include a certificate handler configured to receive a certificate of an external device, and parse or verify the certificate of the external device, cryptographic primitives configured to receive a response to an authentication request of the external device, generate a random number in response to the authentication request, generate a challenge corresponding to the random number, and verify a response of the external device corresponding to the challenge, a shared memory configured to store the parsed certificate, the random number, the challenge, and the response, and an authentication controller configured to control the certificate handler, the cryptographic primitives, and the shared memory via a register setting according to an authentication protocol. The cryptographic primitives may include an STR oscillator-based random number generator having a plurality of ring stages that are each configured to generate either a bubble when an output value of the stage is the same as that of a previous stage,, or a token when the output value of the stage is different from that of the previous stage.

Random number generators, integrated circuits including the random number generators, and methods of operating the random number generators, according to some example embodiments of the present disclosure, may improve quality of generated random numbers by randomly arranging a token position using the random number for each sampling clock.

In addition, the random number generators, integrated circuits including the random number generators, and the methods of operating the random number generators, according to some example embodiments, may improve quality of generated random numbers by adjusting a duty of an entropy extraction bit.

In addition, the random number generators, the integrated circuits including the random number generators, and the methods of operating the random number generators, according to some example embodiments, may generate random numbers at high speed via random number sampling using logic operations.

At least some of the above and other features of the invention are set out in the claims.

### BRIEF DESCRIPTION OF DRAWINGS

The above and other aspects, features, and advantages of the present inventive concepts will be more clearly understood from the following detailed description, taken in conjunction with the accompanying drawings, in which:
FIG. 1 is a block diagram illustrating a random number generator 100 according to some example embodiments;
FIG. 2A is a diagram illustrating a self-timed ring (STR) oscillator 120 according to some example embodiments;
FIG. 2B is a diagram illustrating a duty corrector 130 according to some example embodiments;
FIG. 2C is a diagram illustrating a sampling circuit 140 according to some example embodiments;
FIG. 3A is a diagram illustrating a ring stage ST1 according to some example embodiments;
FIG. 3B is a tabular diagram illustrating a truth table of a ring stage ST1 according to some example embodiments;
FIG. 4A is a diagram illustrating a leakage current path of a ring stage ST1 according to some example embodiments;
FIG. 4B is a diagram illustrating a ring stage ST1a according to some example embodiments;
FIG. 5 is a diagram illustrating an operation principle of an STR oscillator according to some example embodiments;
FIG. 6A is a timing diagram illustrating a process of sampling a random number RN of a random number generator 100 according to some example embodiments;
FIG. 6B is a timing diagram illustrating a process of sampling a random number RN of a random number generator 100 according to some example embodiments;
FIG. 7 is a timing diagram illustrating an operation of a random number generator 100 according to some example embodiments;
FIG. 8 is a flowchart illustrating a method of operating a random number generator 100 according to some example embodiments;
FIG. 9 is a flowchart illustrating a method of operating a random number generator 100 according to some example embodiments;
FIGS. 10A, 10B, and 10C are diagrams illustrating integrated circuits according to some example embodiments;
FIG. 11 is a block diagram illustrating a random number generator 200 according to some example embodiments;
FIG. 12 is a block diagram illustrating an integrated circuit 1000 according to some example embodiments; and
FIG. 13 is a block diagram illustrating an authentication device 2000 according to some example embodiments.

### DETAILED DESCRIPTION

Hereinafter, some example embodiments will be described with reference to the accompanying drawings.

In general, a random number may be used for generation of a private key in a symmetric key encryption system, generation of a private key and a public key in a public key encryption system, or a digital signature and authentication protocol, as examples. A random number may refer to a number that is statistically independent, has a uniform distribution of values, and is unpredictable. The unpredictable characteristic of a random number may increase resistance to security attacks on a cryptographic system. Random number generators, which generate random numbers, may be mainly categorized into pseudo random number generators and true random number generators. The true random number generator, which is a random number generator that uses randomness occurring in a physical phenomenon, may include an entropy source, an entropy extraction circuit, and a post-processing circuit. The entropy source may serve to generate entropy, which is unpredictable data, by using randomness existing in a physical process such as heat, shot noise, or the like in a circuit. Some examples of entropy sources include a ring oscillator, a phase-locked loop (PLL), cellular automata, and the like.

A random number generator, an integrated circuit including the random number generator, and a method of the random number generator according to some example embodiments may perform oscillation based on a self-timed ring (STR) oscillator, correct a bias via a duty corrector, and randomly distribute at least one token or at least one bubble for each sampling clock, thereby improving entropy performance. Herein, an output state of a previous clock cycle that is not changed in response to a clock may be referred to as a bubble, and the output state of the previous clock that is changed may be referred to as a token. Thus, the random number generator, the integrated circuit including the random number generator, and the method of operating the random number generator according to example embodiments may generate a random number with high entropy at high speed.

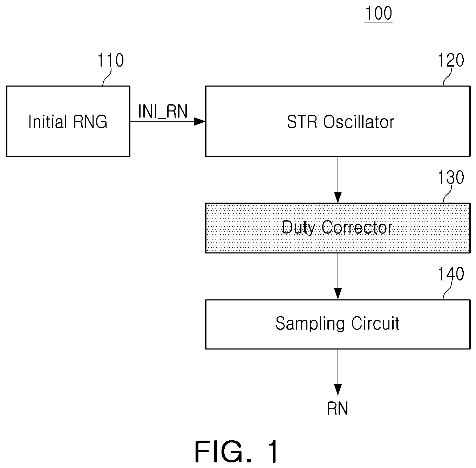

FIG. 1 is a block diagram illustrating a random number generator 100 according to some example embodiments. Referring to FIG. 1, the random number generator 100 includes an initial random number generator 110, an STR oscillator 120, a duty corrector 130, and a sampling circuit 140.

The initial random number generator 110 is implemented to generate an initial random number INI_RN. Here, the initial random number INI_RN may be used as an initial value (or seed value) of the STR oscillator 120. In some example embodiments, the initial random number generator 110 may be implemented as a true random number generator. In some example embodiments, the initial random number generator 110 may be implemented as a pseudo random number generator.

The STR oscillator 120 is implemented to receive the initial random number INI_RN from the initial random number generator 110, and generate a random number using an STR having a plurality of ring stages. Here, each of the ring stages may include a Muller gate and an inverter. When two inputs have the same value, an output of the STR may be one of the input values. In addition, when the two inputs have different values, the output of the STR may be a previous value.

The duty corrector 130 is implemented to correct a duty of each of output bits of the STR oscillator 120. Here, each of the output bits may be an output value of each of ring stages of the STR oscillator 120. For example, the duty corrector 130 may adjust a duty ratio of each of the output bits to 50%. Here, the duty ratio may refer to a ratio of a high-level signal to a low-level signal.

The sampling circuit 140 may be implemented to generate a random number RN by sampling the output bits adjusted by the duty corrector 130.

The random number generator 100 according to some example embodiments may be initialized using initial random data (e.g., initial random number) from an initial random number generator 110, and may generate, from the initial random data, initial values of all or some of L stages (where L is an integer greater than or equal to 3) of the STR oscillator 120. Thus, the random number generator 100 may randomly distribute a token position for each sampling clock, and accumulate entropy caused by a phase difference when performing oscillation after initialization.

The random number generator 100 according to some example embodiments may initialize an STR state for each cycle in an oscillation mode, and perform oscillation, thereby removing a correlation between sampled bits. In addition, the random number generator 100 according to example embodiments may initialize the oscillation mode (or in an initialization mode) after sampling, thereby removing a correlation between bits.

The random number generator 100 according to some example embodiments may sample signals that pass through the duty corrector 130 that adjusts a duty of each of output values of the STR oscillator 120. When a duty of a signal generated through the STR oscillator 120 does not match 50%, a bias may be generated. The random number generator 100 may adjust the duty to 50% by connecting the duty corrector 130 to all of the ring stages. That is, the random number generator 100 may adjust a ratio of "0" and "1" for the output values of the STR oscillator 120. In addition, the random number generator 100 may reset the duty corrector 130 after sampling, thereby resulting in sampling data having independence from previously sampled data.

In addition, the random number generator 100 according to some example embodiments may include the sampling circuit 140 that generates an output signal by performing a logic operation (e.g., an XOR operation) on data to sample the data, and finally performing the logic operation (e.g., the XOR operation) on the sampled data, thereby reducing an overall size in comparison to that of an existing size.

In addition, the random number generator 100 according to some example embodiments may remove or mitigate effects of a leakage current by changing a structure of a basic component of the STR oscillator 120.

The random number generator 100 according to some example embodiments may include the initial random number generator 110 that generates an initial random number INI_RN that determines initial values of the STR oscillator 120, and the duty corrector 130 that corrects a ratio of a duty of each of output values of the STR oscillator 120 to be close to 50%, thereby increasing entropy for random number generation, and generating a high-quality or higher-quality random number.

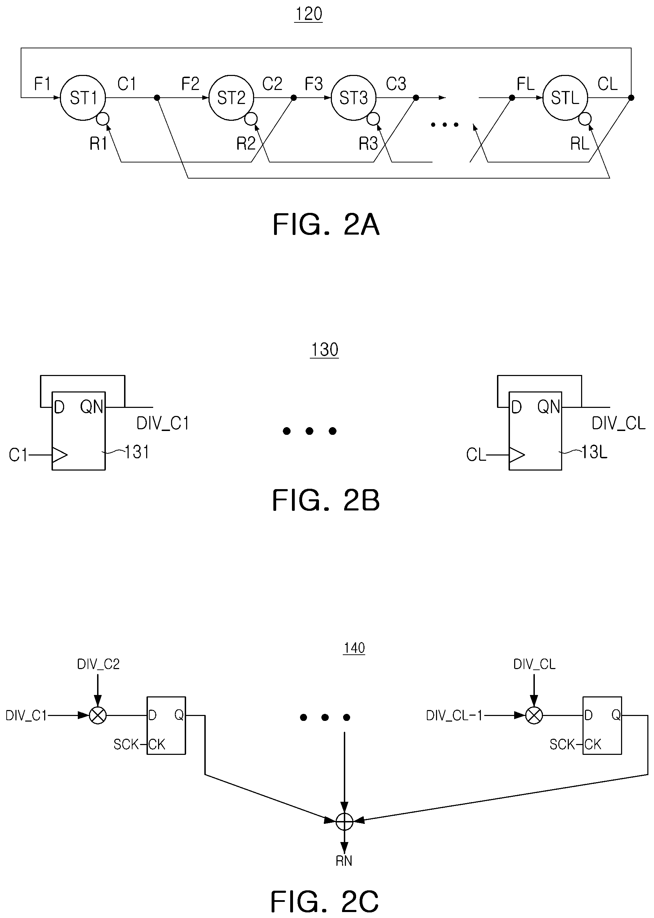

FIG. 2A is a diagram illustrating an STR oscillator 120 according to some example embodiments. Referring to FIG. 2A, the STR oscillator 120 may include a plurality of ring stages ST1, ST2, ST3, ..., and STL (where L is an integer greater than or equal to 3) that are implemented to have a feedback structure.

A first ring stage ST1 may be implemented to receive a first input value F1 and a second input value R1, and output a first output value C1. Here, the first input value F1 of the first ring stage ST1 may be an output value CL of an L-th ring stage STL, and the second input value R1 of the first ring stage ST1 may be an output value C2 of a second ring stage ST2.

The second ring stage ST2 may be implemented to receive a first input value F2 and a second input value R2, and output a second output value C2. Here, the first input value F2 of the second ring stage ST2 may be the output value C1 of the first ring stage ST1, and the second input value R2 of the second ring stage ST2 may be an output value C3 of the third ring stage ST3.

As described above, each of the ring stages ST1, ST2, ST3, ..., and STL may be implemented to receive an output value of a previous ring stage and an output value of a following ring stage, and output an output value according to a truth table of a ring stage. Here, the truth table of the ring stage may indicate that an output value of a previous stage is maintained when a first input value and a second input value are the same, and that the first input value is output when the first input value and the second input value are different from each other.

FIG. 2B is a diagram illustrating the duty corrector 130 according to an example embodiment. Referring to FIG. 2B, the duty corrector 130 may be implemented as a plurality of flip-flops 131 to 13L. Each of the plurality of flip-flops 131 to 13L may be implemented to output a divided signal using an output value of a corresponding ring stage as a clock. For example, a first flip-flop 131 may output a first divided signal DIV_C1 using the output value C1 of the first ring stage ST1 as a clock. A duty ratio of the first divided signal DIV_C1 may be close to 50% by outputting data at a rising edge of the output value C1. Similarly, an L-th flip-flop may output an L-th divided signal DIV_CL.

FIG. 2C is a diagram illustrating a sampling circuit 140 according to some example embodiments. Referring to FIG. 2C, the sampling circuit 140 may receive the divided signals DIV_C1 to DIV_CL that have been duty-corrected by the duty corrector 130, and sample the divided signals DIV_C1 to DIV_CL using a logic operation, thereby generating the random number RN. The sampling may be in response to a sampling clock SCK. Here, the logic operation may be an XOR operation.

For example, the XOR operation may be performed on the first divided signal DIV_C1 and the second divided signal DIV_C2, and a flip-flop may output, in response to the sampling clock SCK, a value obtained by performing the XOR operation as some bits of the random number RN. In the above-described manner, the random number RN may be output by the sampling circuit 140.

It should be understood that the sampling circuit 140 illustrated in FIG. 2C is merely one example embodiment. The sampling circuit 140 according to some example embodiments may generate the random number RN by performing the logic operation on the divided signals DIV_C1 to DIV_CL in various manners. Here, the logic operation may be the XOR operation, but is not limited thereto.

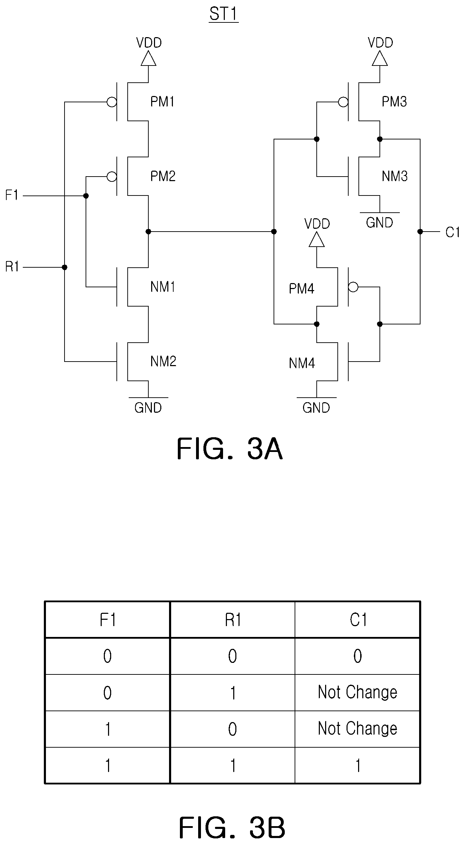

FIG. 3A is a diagram illustrating the ring stage ST1 according to some example embodiments. Referring to FIG. 3A, the ring stage ST1 may include p-channel metal oxide semiconductor (PMOS) transistors PM1 to PM4 and n-channel metal oxide semiconductor (NMOS) transistors NM1 to NM4.

A first PMOS transistor PM1 may include a source connected to a power supply terminal VDD and a gate that receives the second input value R1. A second PMOS transistor PM2 may include a source connected to a drain of the first PMOS transistor PM1 and a gate that receives the first input value F1. A third PMOS transistor PM3 may include a source connected to the power supply terminal VDD and a gate connected to a drain of the second PMOS transistor PM2. A fourth PMOS transistor PM4 may include a source connected to the power supply terminal VDD, a drain connected to the drain of the second PMOS transistor PM2, and a gate connected to a drain of the third PMOS transistor PM3. Here, the output value C1 may be output to the drain of the third PMOS transistor PM3.

A first NMOS transistor NM1 may include a drain connected to the drain of the second PMOS transistor PM2 and a gate that receives the first input value F1. A second NMOS transistor NM2 may include a drain connected to a source of the first NMOS transistor PM1, a source connected to a ground terminal GND, and a gate that receives the second input value R1. A third NMOS transistor NM3 may include a drain connected to the drain of the third PMOS transistor PM3, the source connected to the ground terminal GND, and the gate connected to the drain of the second PMOS transistor PM2. A fourth NMOS transistor NM4 may include the drain connected to the drain of the second PMOS transistor PM2, the source connected to the ground terminal GND, and the gate connected to the drain of the third PMOS transistor PM3.

FIG. 3B is a tabular diagram illustrating a truth table of a ring stage ST1 according to some example embodiments. Referring to FIG. 3B, when the first input value F1 is "0" and the second input value R1 is "0," the output value C1 of the ring stage ST1 may be "0." When the first input value F1 is "0" and the second input value R1 is "1," the output value C1 of the ring stage ST1 may maintain a previous value (not changed). When the first input value F1 is "1" and the second input value R1 is "0," the output value C1 of the ring stage ST1 may maintain the previous value (not changed). When the first input value F1 is "1" and the second input value R1 is "1," the output value C1 of the ring stage ST1 may be "1."

According to the above-described truth table, when the first and second input values F1 and R1 are the same, the output value C1 may be the first input value F1. Conversely, when the first and second input values F1 and R1 are not the same, the output value C1 may maintain a value of a previous stage.

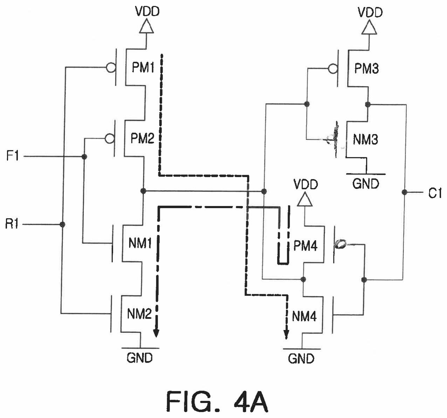

FIG. 4A is a diagram illustrating a leakage current path of a ring stage ST1 according to some example embodiments. As illustrated in FIG. 4A, even when the random number generator 100 is in an off state, a leakage current path may occur depending on levels of the initial values F1, R1, and C1. For example, when F1 = R1 = 0 and C1 = 1, a leakage current path via the first and second PMOS transistors PM1 and PM2 and the fourth NMOS transistor NM4 (shown via the dotted line in FIG. 4A) may occur. In addition, when F1 = R1 = 1 and C1 = 0, a leakage current path via the fourth PMOS transistor PM4 and the first and second NMOS transistors NM1 and NM2 (shown via the primary chain line in FIG. 4A) may occur.

In some embodiments, a ring stage of the STR oscillator 120 may be implemented such that the leakage current path does not occur regardless of the input values F1 and R1 and the output value C1.

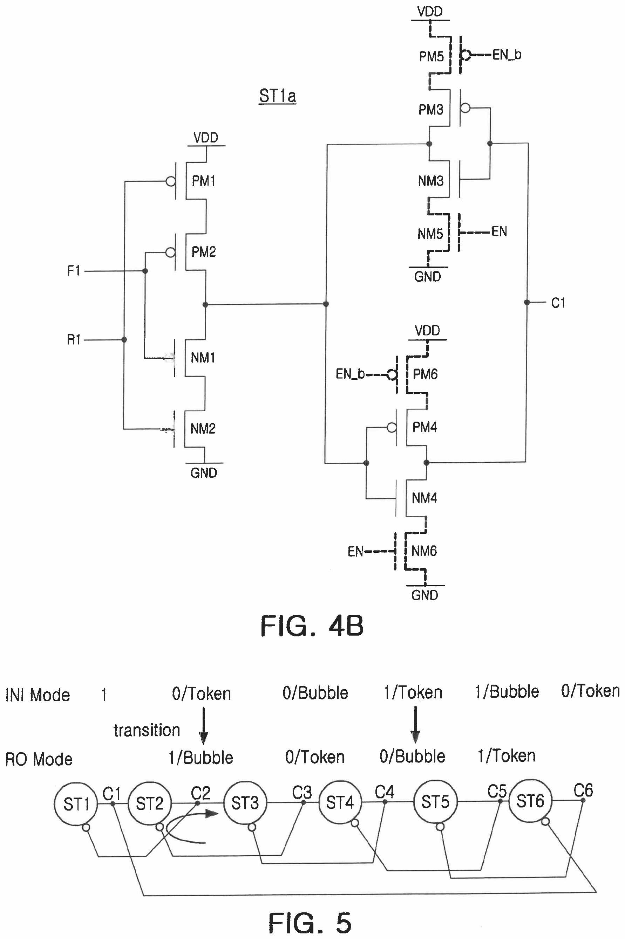

FIG. 4B is a diagram illustrating a ring stage ST1a according to some example embodiments. Referring to FIG. 4B, the ring stage ST1a may further include activation switches PM5, PM6, NM5, and NM6 for blocking a leakage current path compared to the ring stage ST1 illustrated in FIG. 3.

A first activation switch PM5 may turn on/off, in response to an inverted signal EN_b of an activation signal EN, and may be between the power supply terminal VDD and the third PMOS transistor PM3. A second activation switch PM6 may turn on/off, in response to the inverted signal EN_b of the activation signal EN, and may be between the power supply terminal VDD and the fourth PMOS transistor PM4. Each of the first and second activation switches PM5 and PM6 may be implemented as a PMOS transistor.

A third activation switch NM5 may turn on/off, in response to the activation signal EN, and may be between the ground terminal GND and the third NMOS transistor NM3. A fourth activation switch NM6 may turn on/off, in response to the activation signal EN, and may be between the ground terminal GND and the fourth NMOS transistor NM4. Each of the third and fourth activation switches NM5 and NM6 may be implemented as an NMOS transistor.

The ring stage ST1a according to some example embodiments may add the activation switches PM5, PM6, NM5, and NM6 so that leakage current paths according to initial values do not occur, thereby removing all leakage current paths in a deactivated state (i.e., when EN ="0" and EN_b = "1") regardless of states of the input values F1 and R1 and output value C1. Accordingly, in some embodiments leakage currents may be avoided or mitigated.

FIG. 5 is a diagram illustrating an operation principle of an STR oscillator according to some example embodiments. Referring to FIG. 5, the STR oscillator may include six ring stages for ease of description. In general, when an output value of a stage is the same as that of a previous stage, it may be referred to as a bubble, and when an output value of the stage is different from that of the previous stage, it may be referred to as a token. For example, when C1 = 1, C2 = 0, and C3 = 0 in an initialization mode INI, C2 may be a token (because C2 differs from C1) and C3 may be a bubble (because C3 is the same as C2). In this case, when an oscillation mode RO is entered, C2 may transition from 0 to 1 and a token of C2 may be propagated to the third ring stage ST3. When C3 = 0, C4 = 1, and C5 = 1 in the initialization mode, C4 may be a token and C5 may be a bubble. In this case, when the oscillation mode is entered, C4 may transition from 1 to 0, and a token of C4 may be propagated to the fifth ring stage ST5. As described above, a transition may occur depending on a state in the initialization mode, and oscillation may be performed.

In summary, when a state of an i+1-th ring stage STi+1 (i is an integer greater than or equal to 2) is a bubble, a token of the i-th ring stage STi may be transferred to the i+1th ring stage STi+1. Accordingly, a transition may occur, and oscillation may be performed. The STR oscillator may require states of three or more ring stages so as to perform ring oscillation. Here, the number (for example, L) of states of the ring stages may be a sum of the number of tokens and the number of bubbles.

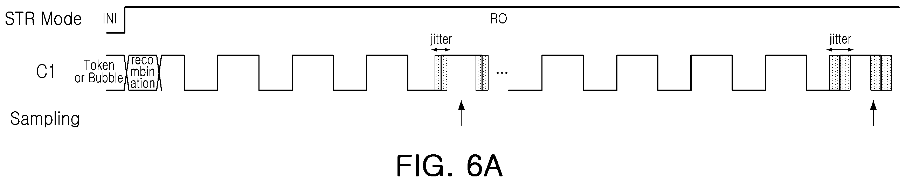

FIG. 6A is a timing diagram illustrating a process of sampling the random number RN of the random number generator 100 according to an example embodiment. In FIG. 6A, a sampling process for the output value C1 of one first ring stage ST1 is illustrated for ease of description. An STR Mode signal may be mainly divided into an initialization mode INI and an oscillation mode RO. For example, a low-level STR Mode signal may indicate the initialization mode INI, and a high-level STR Mode signal may indicate the oscillation mode RO.

Referring to FIG. 6A, a token or bubble of a state of an output value may be determined in the initialization mode INI. By configuring a ring in the oscillation mode RO, jitter according to time may be accumulated, and a random number may be generated at a sampling time point. That is, random data may be obtained by sampling the jitter-accumulated output value C1.

The random number generator 100 according to some example embodiments may initialize a state at each sampling time point so as to sufficiently accumulate jitter (or, in other words, to improve entropy).

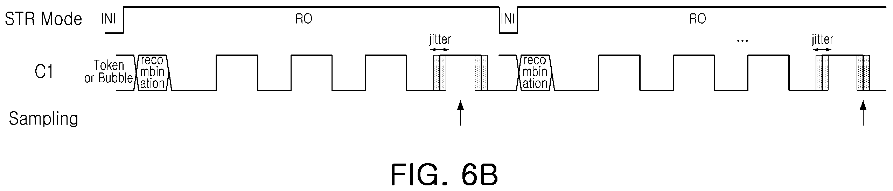

FIG. 6B is a timing diagram illustrating a process of sampling the random number RN of the random number generator 100 according to some example embodiments.

Referring to FIG. 6B, an STR Mode signal may transition from a high level to a low level for each sampling cycle (or period) at a predetermined time. A state of each of ring stages may be initialized after sampling is performed. Accordingly, each state may be initialized again, a correlation between sampled bits may be removed. In addition, initialization of a stage state is performed through the initial random number INI_RN output from the initial random number generator 110 (see FIG. 1), and positions of a token and a bubble may be randomly arranged in the initialization mode INI. Thus, a propagation tendency of the token in the oscillation mode RO may be different for each sampling clock.

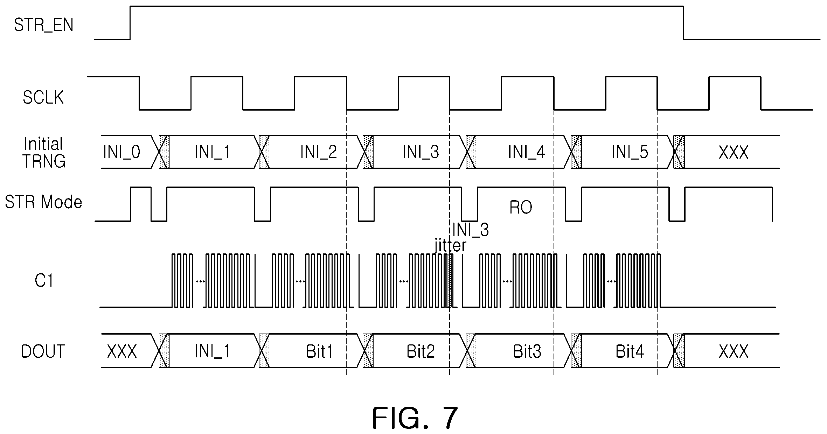

FIG. 7 is a timing diagram illustrating an operation of the random number generator 100 according to some example embodiments.

Referring to FIG. 7, the random number generator 100 may operate based on an STR activation signal STR_EN. An STR Mode signal may change from a high level to a low level according to a cycle of a sampling clock SCLK. The initial random number generator 110 (see FIG. 1) may generate the initial random number INI_RN. The initial random number generator 110 may output different initial random numbers INI_0, INI_1, INI_2, IND_3, IND_4, and INI_5 corresponding to the cycle of the sampling clock SCLK. In some embodiments the initial random number generator 110 may generate the initial random numbers at a falling edge of the sampling clock SCLK. When the STR activation signal STR_EN is at a low level, the initial random number generator 110 may not output an initial random number.

A bubble or a token may be determined in each state (for example, C1) of ring stages according to each of the initial random numbers INI_0, INI_1, INI_2, IND_3, IND_4, and INI_5.

As illustrated in FIG. 7, in the initialization mode INI, a position of the token or bubble may be determined by applying an initial random number (for example, INI_3) determined in a previous sampling state to a random state. Subsequently, when the oscillation mode RO is entered according to a token position and a bubble position resulting from the initialization mode INI, an oscillation phase may be determined. Thereafter, jitter according to time may be accumulated in the oscillation mode RO, and data may be sampled at a falling edge of the sampling clock SCLK. The sampled data may be determined as an output signal DOUT corresponding to the random number RN (see FIG. 1) of the random number generator 100.

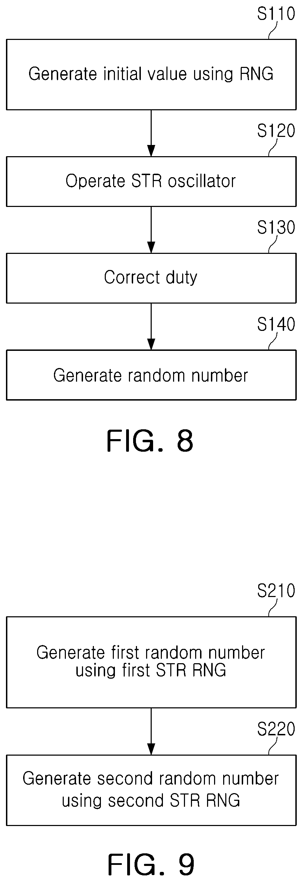

FIG. 8 is a flowchart illustrating a method of operating the random number generator 100 according to an example embodiment. Referring to FIGS. 1 to 8, the random number generator 100 may operate as follows.

The random number generator 100 generates an initial value (for example, INI_RN in FIG. 1) using the initial random number generator 110 (see FIG. 1) (operation S110). The random number generator 100 operates an STR using the initial value INI_RN in the oscillation mode RO of the STR 120 (operation S120). The random number generator 100 ma adjust a duty of each of the output values of the STR 120 (operation S130). The random number generator 100 m generate the random number RN by performing a logic operation on the duty-adjusted output values to perform sampling (operation S140).

In some example embodiments, initial values may be generated using another STR. In some example embodiments, a token position may be randomly distributed for each sampling clock according to the initial values. In an example embodiment, after a random number is generated, the STR 120 may be reset. In an example embodiment, a ratio of output values "1" and "0" of ring stages may be adjusted to 50% using a duty corrector, thereby removing a bias for an entropy source.

FIG. 9 is a flowchart illustrating a method of operating the random number generator 100 according to some example embodiments. Referring to FIG. 9, the random number generator 100 may operate as follows. A first STR oscillation-based random number generator may generate a first random number (operation S210). Here, an initial value of the first STR oscillator-based random number generator may be a fixed value or a variable value. A second STR oscillator-based random number generator may generate a second random number using the first random number as an initial value (operation S220).

In some example embodiments, the number of ring stages of the first STR oscillator-based random number generator may be different from the number of ring stages of the second STR oscillator-based random number generator.

In some example embodiments, bubble positions and token positions of the ring stages of the second STR oscillator-based random number generator may be randomly distributed using the first random number in an initialization mode for each sampling clock SCLK. Here, the first random number may be generated in a previous sampling clock cycle. In some example embodiments, a bias of an entropy source of each of the ring stages of the second STR oscillator-based random number generator may be corrected using a duty corrector. In some example embodiments, an XOR operation may be performed on output data of the ring stages of the second STR oscillator-based random number generator, and values obtained by performing the XOR operation may be sampled so as to output the second random number.

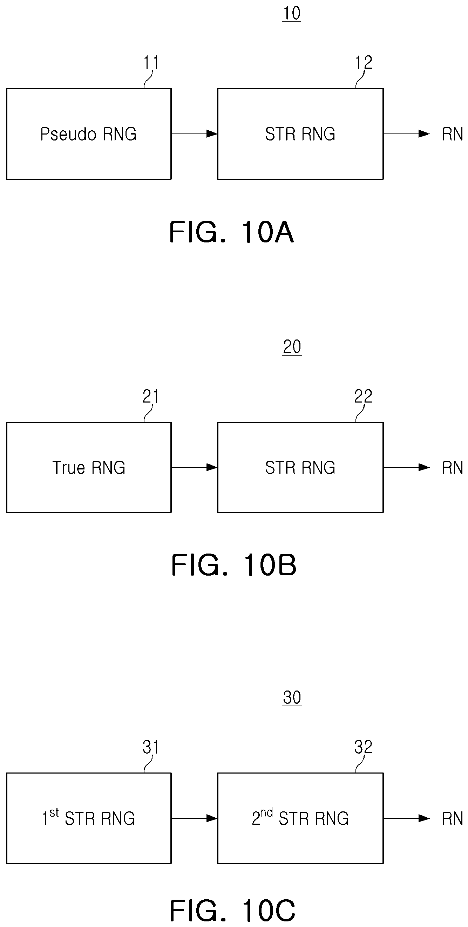

FIGS. 10A, 10B, and 10C are diagrams illustrating integrated circuits according to some example embodiments.

Referring to FIG. 10A, an integrated circuit 10 may include a pseudo random number generator 11 and an STR oscillator-based random number generator 12. The pseudo-random number generator 11 may be implemented to generate a pseudo random number for an initial value of the STR oscillator-based random number generator 12.

Referring to FIG. 10B, the integrated circuit 20 may include a true random number generator (TRNG) 21 and an STR oscillator-based random number generator 22. The TRNG 21 may be implemented to generate a true random number for an initial value of the STR oscillator-based random number generator 22.

Referring to FIG. 10C, the integrated circuit 30 may include a first STR oscillator-based random number generator 31 and a second STR oscillator-based random number generator 32. The first STR oscillator-based random number generator 31 may be implemented to generate a random number for an initial value of the second STR oscillator-based random number generator 32.

The random number generator 100 described with reference to FIGS. 1 to 10 may be implemented using one STR oscillator. However, example embodiments are not limited thereto. A random number generator according to example embodiments may be implemented to generate a random number by one selected from among a plurality of STR oscillators.

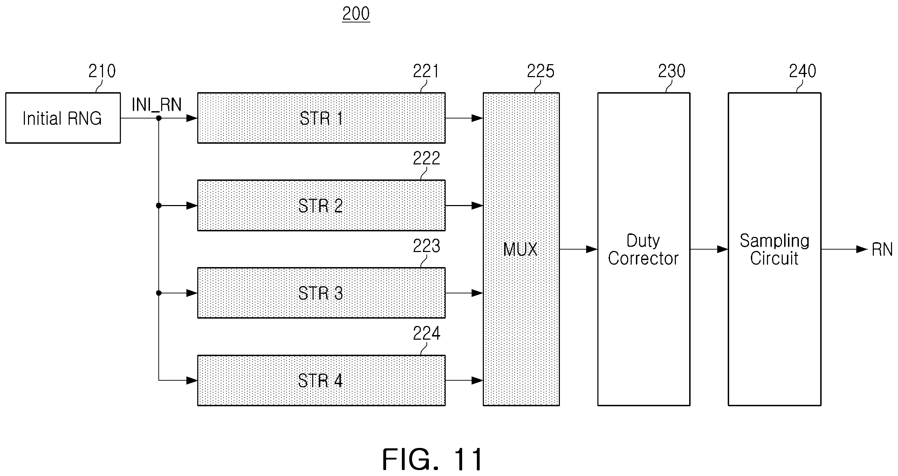

FIG. 11 is a block diagram illustrating a random number generator 200 according to some example embodiments. Referring to FIG. 11, the random number generator 200 may include an initial random number generator 210, a plurality of STR oscillators 221 to 224, a multiplexer 230, a duty corrector 230, and a sampling circuit 240. Each of the initial random number generator 210, the duty corrector 230, and the sampling circuit 240 may be implemented in the same manner as each of the initial random number generator 100, the duty corrector 130 and the sampling circuit 140 illustrated in FIG. 1. FIG. 11 illustrates four STR oscillators 221 to 224 for ease of description, but it should be understood that the number of oscillators is not limited thereto.

Each of the plurality of STR oscillators 221 to 224 may be implemented to receive the same initial random number INI_RN and output bits corresponding to different entropies. The multiplexer 225 may be implemented to select output bits of one of the plurality of STR oscillators 221 to 224 according to the initial random number INI_RN.

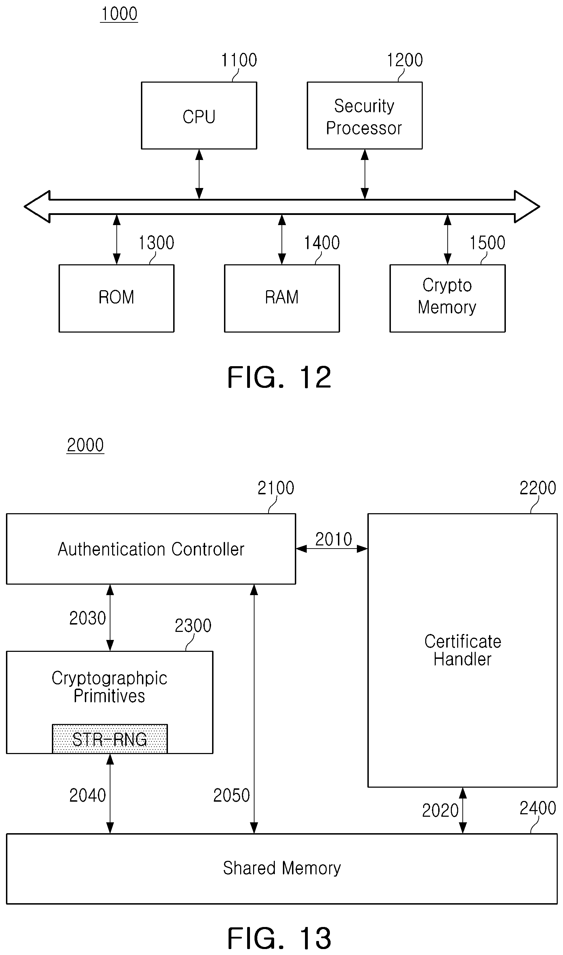

FIG. 12 is a block diagram illustrating an integrated circuit 1000 according to some example embodiments. Referring to FIG. 12, the integrated circuit 1000 may include at least one central processing unit 1100, a security processor 1200, a ROM 1300, a RAM 1400, and a cryptographic memory 1500. The integrated circuit 1000 may correspond to various types of systems using security, and may include or may be included in, for example, a laptop computer, a mobile phone, a smartphone, a tablet PC, a personal digital assistant (PDA), a smart card, and the like.

The central processing unit 1100 may output various control signals for controlling an overall operation of the integrated circuit 1000. In some example embodiments, an application processor (AP) may serve as the central processing unit 1100.

The security processor 1200 may be configured to implement one or more high security-related operations (and to perform such operations at high speed) and may be separate from the central processing unit 1100. The security processor 1200 may perform an operation using secret information, and may also be referred to as a security operator. For example, the security processor 1200 may perform an encryption or decryption operation using a private key (or a secret key) in a public key infrastructure (PKI).

The security processor 1200 may perform various types of operations in relation to the encryption or decryption operation. The security processor 1200 may perform an entire operation for encrypting or decrypting data, or may perform only some operations of a plurality of operations required for encryption or decryption. The security processor 1200 may include a random number generator according to the example embodiments described above with reference to FIGS. 1 to 10 so as to perform the encryption or decryption operation. That is, the security processor 1200 may perform the encryption or decryption operation using a random number generated by combining random signals generated from a plurality of sub-nodes included in a plurality of ring oscillators, thereby increasing security of the security processor 1200.

The ROM 1300 and the RAM 1400 may store data required for driving the integrated circuit 1000. The cryptographic memory 1500 may store data required for driving the security processor 1200. That is, the memory 1500 may record data on which encryption or decryption is to be performed, and may store recovery data on which encryption or decryption is performed.

A random number generator according to some example embodiments may be applicable to an authentication device of an electronic device.

FIG. 13 is a block diagram illustrating an authentication device 2000 according to some example embodiments. Referring to FIG. 13, the authentication device 2000 may include an authentication controller 2100, a certificate handler 2200, cryptographic primitives 2300, and a shared memory 2400.

The authentication controller 2100 may be implemented to perform an authentication protocol based on a public key encryption system. Here, the authentication protocol may be an external authentication protocol with an external device or an internal authentication protocol with an internal component. The authentication controller 2100 may directly perform the authentication protocol via communication with the external device. For example, the authentication controller 2100 may repeatedly invoke components 2200 and 2300 that perform a unit operation so as to perform an operation required when an authentication protocol is performed. In addition, the authentication controller 2100 may share the shared memory 2400 by sequentially adjusting an operation timing of each of the components 2200 and 2300. That is, the authentication controller 2100 may control the certificate handler 2200, the cryptographic primitives 2300, and the shared memory 2400 so that a value input/output from one component via the shared memory 2400 may be used by another component. In some example embodiments, the authentication controller 2100 may control the certificate handler 2200, the cryptographic primitives 2300, and the shared memory 2400 for the authentication protocol via a register setting.

The certificate handler 2200 may be implemented to manage a public key certificate. The certificate handler 2200 may generate, parse, or verify the certificate. The certificate handler 2200 may parse a certificate input from the external device, and store the parsed certificate in the shared memory 2400. For example, the certificate handler 2200 may receive a public key certificate of the external device, and verify whether the public key certificate of the external device is valid using a root certificate of a certificate authority (CA).

The certificate handler 2200 may be implemented to frequently and continuously access the shared memory 2400 so as to manage the public key certificate. That is, the certificate handler 2200 may be implemented to store, in the shared memory 2400, internal variables for generating or verifying the public key certificate. The cryptographic primitives 2300 may be implemented to perform a public key cryptographic operation, perform a hash operation, or generate a random number. For example, the cryptographic primitives 2300 may include a random number generator STR-RNG generating a random number based on an STR oscillator, as described with reference to the example embodiments illustrated in FIGS. 1 to 10.

In some example embodiments, the cryptographic primitives 2300 may generate a challenge in response to an authentication request from the external device when an authentication protocol is performed. Here, the challenge may be obtained by inputting a random number into a hash algorithm. In addition, the cryptographic primitives 2300 may verify a response generated by the external device in response to the challenge of the authentication device 2000. For example, the response input from the external device may be a value obtained by signing the challenge of the authentication device 2000 with a private key of the external device. In this case, the cryptographic primitives 2300 may verify the response of the external device by decrypting the challenge using the response (signature value) of the external device and a public key (certificate) of the external device.

In addition, the cryptographic primitives 2300 may generate a response (or signature value) of the authentication device corresponding to a challenge issued by the external device. In some example embodiments, the cryptographic primitives 2300 may generate a shared secret value using a random number generated when a mutual authentication protocol is performed.

The cryptographic primitives 2300 may be implemented to frequently and continuously access the shared memory 2400 so as to perform a public key cryptographic operation, perform a hash operation, or generate a random number. That is, the cryptographic primitives 2300 may be implemented to store, in the shared memory 2400, internal variables for the cryptographic operation, hash operation, or random number generation.

The shared memory 2400 may be implemented to store data for an operation of at least one of the authentication controller 2100, the certificate handler 2200, and the cryptographic primitives 2300, data generated during the operation, or data according to a result of the operation. In some example embodiments, the shared memory 2400 may be implemented as a volatile memory, as a nonvolatile memory, or as a hybrid memory that includes a volatile memory and a nonvolatile memory. An input/output control operation of the shared memory 2400 may be performed by the authentication controller 2100. That is, the authentication controller 2100 may include a memory controller for controlling the shared memory 2400.

In some example embodiments, the components 2100, 2200, 2300, and 2400 of the authentication device 2000 may connected to one another by data lines 2010, 2020, 2030, 2040, and 2050. Each of the data lines 2010, 2020, 2030, 2040, and 2050 may be used as an input/output line for internal data generated when the authentication protocol is performed.

The components 2100, 2200, and 2300 of the authentication device 2000 in FIG. 13 may share the shared memory 2400. Thus, an input/output of each of the components 2100, 2200, and 2300 may be shared and used with other components. That is, the authentication device 2000 according to example embodiments may be reduced in weight by reducing a memory according to a related art using components independently.

A true random number generator (TRNG) may refer to a device that generates a random number by converting a value obtained from an entropy source generated from nature into a bit stream. The random number may play an important role in a security protocol and a security algorithm. The random number generated from the TRNG may be used as an important key value to protect data in various security devices and parts. A range products that use TRNGs is getting wider and increasing in diversity. For example, TRNGs may be used for various types of products including processors (e.g., Exyos processors), memories, controllers, smartcards, embedded secure elements (eSEs), digital televisions (DTVs), and Internet-of-Things (IoT) devices. In addition, according to some security authentication standards, a start-up test corresponding to a statistical test may be performed before preceding use of a random value, and thus a speed of the TRNG may determine a booting speed of the product. For this reason, the importance of TRNGs that generate the random number at high speed is increasing.

There may be several methods of generating a TRNG. According to example embodiments, a random number may be generated using an STR oscillator that has an advantage of having a high speed by propagating multiple events simultaneously without colliding with each other. Accordingly, a TRNG according to example embodiments may generate a random number at high speed, correct a bias using a duty corrector, and randomly distribute a position of an initial token for each sampling clock, thereby increasing randomness, which may improve a quality of the random number.

The TRNG according to an example embodiment may be implemented to correct a ratio of "0" and "1" to be close to 50% using the duty corrector. In addition, an additional STR oscillator-based TRNG block may be arranged to determine an initial setting value of an STR oscillator, and thus the initial setting value may become random by an initial random number generated via the corresponding block. As the initial setting value is random, token positions and bubble positions of a state may be randomly distributed for each cycle. Accordingly, when a ring oscillation mode is entered, a pattern of collision and spread may be different for each cycle. As a result, the randomness of a random number may be increased.

An output value of one STR oscillator may determine an initial value of another STR oscillator, and thus the TRNG according to some example embodiments may be implemented in a form of accumulating entropy generated in each STR oscillator. Accordingly, an STR oscillator-based TRNG according to example embodiments may improve random number quality, and in some instances may greatly improve random number quality.

While some example embodiments have been shown and described above, it will be apparent to those skilled in the art that modifications and variations could be made without departing from the scope of the present inventive concepts as defined by the appended claims.

## Claims

1. A random number generator comprising:
an initial random number generator (110) configured to generate an initial random number (INI_RN);
a self-timed ring, STR, oscillator (120) configured to receive the initial random number (INI_RN) from the initial random number generator (110), the STR oscillator (120) having a plurality of ring stages each configured to generate either a bubble when an output value of the stage is the same as that of a previous stage, or a token when the output value of the stage is different from that of the previous stage;
a duty corrector (130) configured to adjust a duty of an output value of each of the ring stages; and
a sampling circuit (140) configured to sample a random number using a logic operation from the duty-corrected output values.

2. The random generator of claim 1, wherein the initial random number generator (110) is a true random number generator.

3. The random number generator of claim 1, wherein the initial random number generator (110) is a pseudo random number generator.

4. The random number generator of claim 1, 2 or 3, wherein the STR oscillator (120) is configured to set, in an initialization mode, an initial output value of each of the plurality of ring stages using the initial random number.

5. The random number generator of claim 4, wherein:
the STR oscillator (120) is configured to generate, in an oscillation mode subsequent to the initialization mode, the bubble or the token in each of the plurality of ring stages, and
the plurality of ring stages comprises at least three ring stages.

6. The random number generator of any one of claims 1 to 5, wherein:
each of the plurality of ring stages is configured to receive a first input value that is an output value of another ring stage and a second input value that is an output value of another ring stage, and outputs an output value,
when the first input value and the second input value are not the same, each of the plurality of ring stages outputs the first input value, and
when the first input value and the second input value are the same, each of the plurality of ring stages maintains the output value.

7. The random number generator of claim 6, wherein each of the plurality of ring stages includes:
a first p-channel metal oxide semiconductor, PMOS, transistor having a source connected to a power supply terminal and a gate that receives the second input value;
a second PMOS transistor having a source connected to a drain of the first PMOS transistor and a gate that receives the first input value;
a third PMOS transistor having the source connected to the power supply terminal, a drain configured to output an output value of each of the plurality of ring stages, and a gate connected to
a drain of the second PMOS transistor;
a fourth PMOS transistor having the source connected to the power supply terminal, a drain connected to the drain of the second PMOS transistor, and a gate connected to the drain of the third PMOS transistor;
a first n-channel metal oxide semiconductor (NMOS) transistor having the drain connected to the drain of the second PMOS transistor and the gate that receives the first input value;
a second NMOS transistor having a drain connected to a source of the first NMOS transistor, a source connected to a ground terminal, and the gate that receives the second input value;
a third NMOS transistor having a drain connected to the drain of the third PMOS transistor, the source connected to the ground terminal, and a gate connected to the drain of the second PMOS transistor; and
a fourth NMOS transistor having the drain connected to the drain of the second PMOS transistor, the source connected to the ground terminal, and the gate connected to the drain of the third PMOS transistor.

8. The random number generator of claim 6, wherein each of the plurality of ring stages includes:
a first p-channel metal oxide semiconductor (PMOS) transistor having a source connected to a power supply terminal and a gate that receives the second input value;
a second PMOS transistor having a source connected to a drain of the first PMOS transistor and a gate that receives the first input value;
a third PMOS transistor having a drain configured to output an output value of each of the plurality of ring stages and a gate connected to a drain of the second PMOS transistor;
a fourth PMOS transistor having a drain connected to the drain of the second PMOS transistor, and a gate connected to the drain of the third PMOS transistor;
a fifth PMOS transistor having the source connected to the power supply terminal, a drain connected to a source of the third PMOS transistor, and a gate that receives an inverted signal of an activation signal;
a sixth PMOS transistor having the source connected to the power supply terminal, a drain connected to a source of the fourth PMOS transistor, and the gate that receives the inverted signal;
a first n-channel metal oxide semiconductor (NMOS) transistor having the drain connected to the drain of the second PMOS transistor and the gate that receives the first input value;
a second NMOS transistor having a drain connected to a source of the first NMOS transistor, a source connected to a ground terminal, and the gate that receives the second input value;
a third NMOS transistor having a drain connected to the drain of the third PMOS transistor and a gate connected to the drain of the second PMOS transistor;
a fourth NMOS transistor having the drain connected to the drain of the second PMOS transistor and the gate connected to the drain of the third PMOS transistor;
a fifth NMOS transistor having a drain connected to a source of the third NMOS transistor, the source connected to the ground terminal, and a gate that receives the activation signal; and
a sixth NMOS transistor having a drain connected to a source of the fourth NMOS transistor, the source connected to the ground terminal, and the gate that receives the activation signal.

9. The random number generator of any one of claims 1 to 8, wherein the duty corrector (130) includes a flip-flop configured to output a divided clock using an output value of each of the plurality of ring stages as the clock.

10. The random number generator of claim 9, wherein the sampling circuit (140) includes flipflops configured to perform an XOR operation on two adjacent divided clocks among the plurality of ring stages, and output, in response to a sampling clock, a value obtained by performing the XOR operation as a corresponding bit.

11. An operating method of a random number generator, the random number generator including an STR oscillator (120) having a plurality of ring stages that each generate either a bubble when an output value of the stage is the same as that of a previous stage, or a token when the output value of the stage is different from that of the previous stage, the method comprising:
generating initial values for at least some of the plurality of ring stages using an initial random number generator (110);
operating the STR oscillator (120) using the generated initial values;
correcting duties of output values outputted by the STR oscillator (120); and
generating a random number by sampling the corrected output values.

12. The method of claim 11, wherein the STR oscillator (120) is a first STR oscillator, and wherein the generating the initial values comprises generating the initial values using a second STR oscillator.

13. The method of claim 11 or 12, wherein the operating of the STR oscillator (120) comprises randomly distributing a position of the token according to the initial values.

14. The method of claim 11, 12 or 13, further comprising resetting the STR oscillator (120) after generating the random number.

15. The method of any one of claims 11 to 14, wherein the correcting of the duties comprises removing a bias for an entropy source of a corresponding ring stage by adjusting a ratio of "1" and "0" to 50% using a duty corrector (130).

## Patentansprüche

1. Zufallszahlengenerator, umfassend:
einen Anfangszufallszahlengenerator (110), der so konfiguriert ist, dass er eine Anfangszufallszahl (INI_RN) erzeugt;
einen selbstgetakteten Ringoszillator, STR, (120), der so konfiguriert ist, dass er die Anfangszufallszahl (INI_RN) von dem Anfangszufallszahlengenerator (110) empfängt, wobei der STR-Oszillator (120) eine Vielzahl von Ringstufen aufweist, die jeweils so konfiguriert sind, dass sie entweder eine Blase erzeugen, wenn ein Ausgangswert der Stufe mit dem einer vorherigen Stufe übereinstimmt, oder ein Token, wenn sich der Ausgangswert der Stufe von dem der vorherigen Stufe unterscheidet;
einen Tastverhältniskorrektor (130), der so konfiguriert ist, dass er ein Tastverhältnis eines Ausgangswerts jeder der Ringstufen anpasst; und
eine Abtastschaltung (140), die so konfiguriert ist, dass sie mittels einer logischen Operation eine Zufallszahl aus den tastverhältniskorrigierten Ausgangswerten abtastet.

2. Zufallsgenerator nach Anspruch 1, wobei der Anfangszufallszahlengenerator (110) ein echter Zufallszahlengenerator ist.

3. Zufallszahlengenerator nach Anspruch 1, wobei der Anfangszufallszahlengenerator (110) ein Pseudozufallszahlengenerator ist.

4. Zufallszahlengenerator nach Anspruch 1, 2 oder 3, wobei der STR-Oszillator (120) so konfiguriert ist, dass er in einem Initialisierungsmodus unter Verwendung der Anfangszufallszahl einen Anfangsausgangswert jeder der Vielzahl von Ringstufen festlegt.

5. Zufallszahlengenerator nach Anspruch 4, wobei:
der STR-Oszillator (120) so konfiguriert ist, dass er in einem auf den Initialisierungsmodus folgenden Oszillationsmodus in jeder der Vielzahl von Ringstufen die Blase oder das Token erzeugt, und
die Vielzahl von Ringstufen mindestens drei Ringstufen umfasst.

6. Zufallszahlengenerator nach einem der Ansprüche 1 bis 5, wobei:
jede der Vielzahl von Ringstufen so konfiguriert ist, dass sie einen ersten Eingangswert, der ein Ausgangswert einer anderen Ringstufe ist, und einen zweiten Eingangswert, der ein Ausgangswert einer weiteren Ringstufe ist, empfängt und einen Ausgangswert ausgibt,
wenn der erste Eingangswert und der zweite Eingangswert nicht übereinstimmen, jede der Vielzahl von Ringstufen den ersten Eingangswert ausgibt, und
wenn der erste Eingangswert und der zweite Eingangswert übereinstimmen, jede der Vielzahl von Ringstufen den Ausgangswert beibehält.

7. Zufallszahlengenerator nach Anspruch 6, wobei jede der Vielzahl von Ringstufen Folgendes einschließt:
einen ersten p-Kanal-Metall-Oxid-Halbleiter-, PMOS-, Transistor, der eine Quelle, die mit einem Stromversorgungsanschluss verbunden ist und ein Gate, das den zweiten Eingangswert empfängt, aufweist;
einen zweiten PMOS-Transistor mit einer Quelle, die mit einem Drain des ersten PMOS-Transistors verbunden ist und einem Gate, das den ersten Eingangswert empfängt;
einen dritten PMOS-Transistor mit der Quelle, die mit dem Versorgungsspannungsanschluss verbunden ist, einem Drain, der so konfiguriert ist, dass er einen Ausgangswert jeder der Vielzahl von Ringstufen ausgibt, und einem Gate, das mit
einem Drain des zweiten PMOS-Transistors verbunden ist;
einen vierten PMOS-Transistor mit der Quelle, die mit dem Versorgungsspannungsanschluss verbunden ist, einem Drain, der mit dem Drain des zweiten PMOS-Transistors verbunden ist und einem Gate, das mit dem Drain des dritten PMOS-Transistors verbunden ist;
einen ersten n-Kanal-Metall-Oxid-Halbleiter-, NMOS-, Transistor mit dem Drain, der mit dem Drain des zweiten PMOS-Transistors verbunden ist und dem Gate, das den ersten Eingangswert empfängt;
einen zweiten NMOS-Transistor mit einem Drain, der mit einer Quelle des ersten NMOS-Transistors verbunden ist, einer Quelle, die mit einem Masseanschluss verbunden ist und dem Gate, das den zweiten Eingangswert empfängt;
einen dritten NMOS-Transistor mit einem Drain, der mit dem Drain des dritten PMOS-Transistors verbunden ist, der Quelle, die mit dem Masseanschluss verbunden ist und einem Gate, das mit dem Drain des zweiten PMOS-Transistors verbunden ist; und
einen vierten NMOS-Transistor mit dem Drain, der mit dem Drain des zweiten PMOS-Transistors verbunden ist, der Quelle, die mit dem Masseanschluss verbunden ist und dem Gate, das mit dem Drain des dritten PMOS-Transistors verbunden ist.

8. Zufallszahlengenerator nach Anspruch 6, wobei jede der Vielzahl von Ringstufen Folgendes einschließt:
einen ersten p-Kanal-Metall-Oxid-Halbleiter-, (PMOS)-, Transistor, der eine Quelle, die mit einem Stromversorgungsanschluss verbunden ist und ein Gate, das den zweiten Eingangswert empfängt, aufweist;
einen zweiten PMOS-Transistor mit einer Quelle, die mit einem Drain des ersten PMOS-Transistors verbunden ist und einem Gate, das den ersten Eingangswert empfängt;
einen dritten PMOS-Transistor mit einem Drain, der so konfiguriert ist, dass er einen Ausgangswert jeder der Vielzahl von Ringstufen ausgibt, und einem Gate, das mit einem Drain des zweiten PMOS-Transistors verbunden ist;
einen vierten PMOS-Transistor mit dem Drain, der mit dem Drain des zweiten PMOS-Transistors verbunden ist, und einem Gate, das mit dem Drain des dritten PMOS-Transistors verbunden ist;
einen fünften PMOS-Transistor mit der Quelle, die mit dem Stromversorgungsanschluss verbunden ist, einem Drain, der mit einer Quelle des dritten PMOS-Transistors verbunden ist und einem Gate, das ein invertiertes Signal eines Aktivierungssignals empfängt;
einen sechsten PMOS-Transistor mit der Quelle, die mit dem Versorgungsspannungsanschluss verbunden ist, einem Drain, der mit einer Quelle des vierten PMOS-Transistors verbunden ist und einem Gate, das das invertierte Signal empfängt;
einen ersten n-Kanal-Metall-Oxid-Halbleiter-, NMOS-, Transistor mit dem Drain, der mit dem Drain des zweiten PMOS-Transistors verbunden ist und dem Gate, das den ersten Eingangswert empfängt;
einen zweiten NMOS-Transistor mit einem Drain, der mit einer Quelle des ersten NMOS-Transistors verbunden ist, einer Quelle, die mit einem Masseanschluss verbunden ist und dem Gate, das den zweiten Eingangswert empfängt;
einen dritten NMOS-Transistor mit einem Drain, der mit dem Drain des dritten PMOS-Transistors verbunden ist, und einem Gate, das mit dem Drain des zweiten PMOS-Transistors verbunden ist;
einen vierten NMOS-Transistor mit dem Drain, der mit dem Drain des zweiten PMOS-Transistors verbunden ist, und dem Gate, das mit dem Drain des dritten PMOS-Transistors verbunden ist;
einen fünften NMOS-Transistor mit einem Drain, der mit einer Quelle des dritten NMOS-Transistors verbunden ist, der Quelle, die mit dem Masseanschluss verbunden ist und einem Gate, das das Aktivierungssignal empfängt; und
einen sechsten NMOS-Transistor mit einem Drain, der mit einer Quelle des vierten NMOS-Transistors verbunden ist, der Quelle, die mit dem Masseanschluss verbunden ist und dem Gate, das das Aktivierungssignal empfängt; und

9. Zufallszahlengenerator nach einem der Ansprüche 1 bis 8, wobei der Tastverhältniskorrektor (130) ein Flipflop einschließt, das so konfiguriert ist, dass es unter Verwendung eines Ausgangswerts jeder der Vielzahl von Ringstufen als Takt einen geteilten Takt ausgibt.

10. Zufallszahlengenerator nach Anspruch 9, wobei die Abtastschaltung (140) Flipflops einschließt, die so konfiguriert sind, dass sie eine XOR-Operation an zwei benachbarten geteilten Takten unter der Vielzahl von Ringstufen durchführen und als Reaktion auf einen Abtasttakt einen durch die Durchführung der XOR-Operation erhaltenen Wert als entsprechendes Bit ausgeben.

11. Betriebsverfahren für einen Zufallszahlengenerator, wobei der Zufallszahlengenerator einen STR-Oszillator (120) einschließt, der einer Vielzahl von Ringstufen aufweist, die jeweils entweder eine Blase erzeugen, wenn ein Ausgangswert der Stufe mit dem einer vorherigen Stufe übereinstimmt, oder ein Token, wenn sich der Ausgangswert der Stufe von dem der vorherigen Stufe unterscheidet, wobei das Verfahren Folgendes umfasst:
Erzeugen von Anfangswerten für mindestens einige der Vielzahl von Ringstufen unter Verwendung eines Anfangszufallszahlengenerators (110);
Betreiben des STR-Oszillators (120) unter Verwendung der erzeugten Anfangswerte;
Korrigieren der Tastverhältnisse von durch den STR-Oszillator ausgegebenen Ausgangswerten (120); und
Erzeugen einer Zufallszahl durch Abtasten der korrigierten Ausgangswerte.

12. Verfahren nach Anspruch 11, wobei es sich bei dem STR-Oszillator (120) um einen ersten STR-Oszillator handelt, und wobei das Erzeugen der Anfangswerte das Erzeugen der Anfangswerte unter Verwendung eines zweiten STR-Oszillators umfasst.

13. Verfahren nach Anspruch 11 oder 12, wobei das Betreiben des STR-Oszillators (120) das zufallsmäßige Verteilen einer Position des Tokens gemäß den Anfangswerten umfasst.

14. Verfahren nach Anspruch 11, 12 oder 13, weiter umfassend das Zurücksetzen des STR-Oszillators (120) nach dem Erzeugen der Zufallszahl.

15. Verfahren nach einem der Ansprüche 11 bis 14, wobei das Korrigieren der Tastverhältnisse das Entfernen einer Vorspannung für eine Entropiequelle einer entsprechenden Ringstufe durch Einstellen eines Verhältnisses von "1" und "0" auf 50 % unter Verwendung eines Tastverhältniskorrektors (130) umfasst.

## Revendications

1. Générateur de nombres aléatoires comprenant :
un générateur de nombre aléatoire initial (110) configuré pour générer un nombre aléatoire initial (INI_RN);
un oscillateur en anneau auto-cadencé, STR, (120) configuré pour recevoir le nombre aléatoire initial (INI_RN) en provenance du générateur de nombre aléatoire initial (110), l'oscillateur STR (120) présentant une pluralité d'étages annulaires configurés chacun pour générer soit une bulle lorsqu'une valeur de sortie de l'étage est la même que celle d'un étage précédent, soit un jeton lorsque la valeur de sortie de l'étage est différente de celle de l'étage précédent ;
un correcteur de cycle (130) configuré pour ajuster un cycle d'une valeur de sortie de chaque étage annulaire de la pluralité d'étages annulaires ; et
un circuit d'échantillonnage (140) configuré pour échantillonner un nombre aléatoire à l'aide d'une opération logique à partir des valeurs de sortie de cycle corrigé.

2. Générateur de nombres aléatoires selon la revendication 1, dans lequel le générateur de nombre aléatoire initial (110) est un générateur de nombres réellement aléatoires.

3. Générateur de nombres aléatoires selon la revendication 1, dans lequel le générateur de nombre aléatoire initial (110) est un générateur de nombres pseudo-aléatoires.

4. Générateur de nombres aléatoires selon la revendication 1, 2 ou 3, dans lequel l'oscillateur STR (120) est configuré pour définir, dans un mode d'initialisation, une valeur de sortie initiale de chaque étage annulaire de la pluralité d'étages annulaires à l'aide du nombre aléatoire initial.

5. Générateur de nombres aléatoires selon la revendication 4, dans lequel :
l'oscillateur STR (120) est configuré pour générer, dans un mode d'oscillation postérieur au mode d'initialisation, la bulle ou le jeton dans étage annulaire de la pluralité d'étages annulaires, et
la pluralité d'étages annulaires comprend au moins trois étages annulaires.

6. Générateur de nombres aléatoires selon l'une quelconque des revendications 1 à 5, dans lequel :
chaque étage annulaire de la pluralité d'étages annulaires est configuré pour recevoir une première valeur d'entrée qui est une valeur de sortie d'un autre étage annulaire et une seconde valeur d'entrée qui est une valeur de sortie d'un autre étage annulaire, et délivre une valeur de sortie.
lorsque la première valeur d'entrée et la seconde valeur d'entrée sont différentes, chaque étage annulaire de la pluralité d'étages annulaires délivre la première valeur d'entrée, et
lorsque la première valeur d'entrée et la seconde valeur d'entrée sont les mêmes, chaque étage annulaire de la pluralité d'étages annulaires garde la valeur de sortie.

7. Générateur de nombres aléatoires selon la revendication 6, dans lequel chaque étage annulaire de la pluralité d'étages annulaires inclut :
un premier transistor à métal-oxyde-semi-conducteur à canal p, PMOS, présentant une source connectée à une borne d'alimentation électrique et une grille qui reçoit la seconde valeur d'entrée ;
un deuxième transistor PMOS présentant une source connectée à un drain du premier transistor PMOS et une grille qui reçoit la première valeur d'entrée ;
un troisième transistor PMOS présentant la source connectée à la borne d'alimentation électrique, le drain étant configuré pour délivrer une valeur de sortie de chaque étage annulaire de la pluralité d'étages annulaires et la grille étant connectée à
un drain du deuxième transistor PMOS ;
un quatrième transistor PMOS présentant la source connectée à la borne d'alimentation électrique, un drain connecté au drain du deuxième transistor PMOS et une grille connectée au drain du troisième transistor PMOS ;
un premier transistor à métal-oxyde-semi-conducteur à canal n (NMOS) présentant le drain connecté au drain du deuxième transistor PMOS et la grille qui reçoit la première valeur d'entrée ;
un deuxième transistor NMOS présentant un drain connecté à une source du premier transistor NMOS, une source connectée à une borne de masse, et la grille qui reçoit la seconde valeur d'entrée ;
un troisième transistor NMOS présentant un drain connecté au drain du troisième transistor PMOS, la source connectée à la borne de masse et une grille connectée au drain du deuxième transistor PMOS ; et
un quatrième transistor NMOS présentant le drain connecté au drain du deuxième transistor PMOS, la source connectée à la borne de masse et la grille connectée au drain du troisième transistor PMOS.

8. Générateur de nombres aléatoires selon la revendication 6, dans lequel chaque étage annulaire de la pluralité d'étages annulaires inclut :
un premier transistor à métal-oxyde-semi-conducteur à canal p (PMOS) présentant une source connectée à une borne d'alimentation électrique et une grille qui reçoit la seconde valeur d'entrée ;
un deuxième transistor PMOS présentant une source connectée à un drain du premier transistor PMOS et une grille qui reçoit la première valeur d'entrée ;
un troisième transistor PMOS présentant un drain configuré pour délivrer une valeur de sortie de chaque étage annulaire de la pluralité d'étages annulaires et une grille connectée à un drain du deuxième transistor PMOS ;
un quatrième transistor PMOS présentant un drain connecté au drain du deuxième transistor PMOS et une grille connectée au drain du troisième transistor PMOS ;
un cinquième transistor PMOS présentant la source connectée à la borne d'alimentation électrique, un drain connecté à une source du troisième transistor PMOS et une grille qui reçoit un signal inversé d'un signal d'activation ;
un sixième transistor PMOS présentant la source connectée à la borne d'alimentation électrique, un drain connecté à une source du quatrième transistor PMOS et la grille qui reçoit le signal inversé ;
un premier transistor à métal-oxyde-semi-conducteur à canal n (NMOS) présentant le drain connecté au drain du deuxième transistor PMOS et la grille qui reçoit la première valeur d'entrée ;
un deuxième transistor NMOS présentant un drain connecté à une source du premier transistor NMOS, une source connectée à une borne de masse et la grille qui reçoit la seconde valeur d'entrée ;
un troisième transistor NMOS présentant un drain connecté au drain du troisième transistor PMOS et une grille connectée au drain du deuxième transistor PMOS ;
un quatrième transistor NMOS présentant le drain connecté au drain du deuxième transistor PMOS et la grille connectée au drain du troisième transistor PMOS ;
un cinquième transistor NMOS présentant un drain connecté à une source du troisième transistor NMOS, la source étant connectée à la borne de masse, et une grille qui reçoit le signal d'activation ; et
un sixième transistor NMOS présentant un drain connecté à une source du quatrième transistor NMOS, la source étant connectée à la borne de masse, et la grille qui reçoit le signal d'activation.

9. Générateur de nombres aléatoires selon l'une quelconque des revendications 1 à 8, dans lequel le correcteur de cycle (130) inclut une bascule configurée pour délivrer une horloge divisée utilisant une valeur de sortie de chaque étage annulaire de la pluralité d'étages annulaires comme horloge.

10. Générateur de nombres aléatoires selon la revendication 9, dans lequel le circuit d'échantillonnage (140) inclut des bascules configurées pour effectuer une opération OU exclusif sur deux horloges divisées adjacentes parmi la pluralité d'étages en anneau, et délivrer, en réponse à une horloge d'échantillonnage, une valeur obtenue en effectuant l'opération OU exclusif comme un bit correspondant.

11. Procédé de fonctionnement d'un générateur de nombres aléatoires, le générateur de nombres aléatoires incluant un oscillateur STR (120) présentant une pluralité d'étages annulaires qui génèrent chacun soit une bulle lorsqu'une valeur de sortie de l'étage est la même que celle d'un précédent étage, soit un jeton lorsque la valeur de sortie de l'étage est différente de celle du précédent étage, le procédé comprenant :
la génération de valeurs initiales pour au moins certains étages annulaires de la pluralité d'étages annulaires à l'aide d'un générateur de nombres aléatoires initial (110) ;
le fonctionnement de l'oscillateur STR (120) à l'aide des valeurs initiales générées ;
la correction de rapports cycliques de valeurs de sortie délivrées par l'oscillateur STR (120) ; et
la génération d'un nombre aléatoire en échantillonnant les valeurs de sortie corrigées.

12. Procédé selon la revendication 11, dans lequel l'oscillateur STR (120) est un premier oscillateur STR et dans lequel la génération des valeurs initiales comprend la génération des valeurs initiales à l'aide d'un second oscillateur STR.

13. Procédé selon la revendication 11 ou 12, dans lequel le fonctionnement de l'oscillateur STR (120) comprend la distribution aléatoire d'une position du jeton selon les valeurs initiales.

14. Procédé selon la revendication 11, 12 ou 13, comprenant en outre la réinitialisation de l'oscillateur STR (120) après la génération du nombre aléatoire.

15. Procédé selon l'une quelconque des revendications 11 à 14, dans lequel la correction des rapports cycliques comprend la suppression d'un biais pour une source d'entropie d'un étage annulaire correspondant en ajustant un rapport de « 1 » et « 0 » à 50 % à l'aide d'un correcteur de cycle (130).
